# EUROPEAN PATENT SPECIFICATION

(11) **EP 3 335 289 B1**
(45) Date of publication and mention of the grant of the patent: **03.11.2021**
(21) Application number: 16836740.7
(22) Date of filing: 07.06.2016
(51) Int. Cl.: H02H 7/22

(54) **PHASE COMPENSATION SYSTEM**
PHASENAUSGLEICHSSYSTEM
SYSTÈME DE COMPENSATION DE PHASE

(30) Priority: 16.08.2015 IL 24059515
(43) Date of publication of application: 20.06.2018
(73) Proprietor: Tamir, Oren, 4372619 Ra'anana (IL)
(72) Inventor: Tamir, Oren, 4372619 Ra'anana (IL)
(74) Representative: Balder IP Law, S.L.
(86) International application number: PCT/IL2016/050588
(87) International publication number: WO 2017/029654

(56) References cited:
- EP-A1- 2 672 603
- WO-A1-2013/070237
- WO-A1-2014/191692
- CN-A- 1 319 927
- US-A1- 2009 085 403
- US-A1- 2015 102 673

## Description

### FIELD OF THE INVENTION

The present invention generally relates to power grid backup systems and specifically to a three-phase compensation system.

### BACKGROUND

A common problem consumers of three-phase power supply often encounter is the "loss" of a phase. Sometimes, one (or even two) of the phases supplied by the power provider malfunctions. In such a case, consumers may use substituting power sources such as, for example, a generator in order to compensate for the "lost" phase(s). Consumers who have no alternative power provider stay without electricity which should have been provided by the "lost" phase(s).

GB Pub. No. 367455 describes substituting sources in service. In a system, such as a ship propulsion system, having main and auxiliary generators driven by a common prime mover, such as a Diesel engine, and having a second auxiliary generator which may form part of a similar set, a load circuit which has to be continuously supplied is automatically transferred from one auxiliary generator to another if the voltage of the first falls below a given value when the second machine is generating an adequate voltage.

GB Pub. No. 396759 describes systems depending upon static transformers. A 3 phase/4 phase/3 phase overhead line transmission system in which the 4-phase high tension current is carried by at least four conductors and a ground wire, includes protective arrangements incorporating a "balanced beam " relay whereby, on a fault occurring on a line, that line and the line carrying the "quarterphase " associated with it are disconnected and earthed, the system then operating as a 3phase/2-phase 3 wire/3-phase system. If a spare pair of conductors is available they may replace the broken down conductor and associated line.

GB Pub. No. 413723 describes an electric relay arrangement responsive to the phase relationship between corresponding voltages of two three-phase systems involves a mechanically balanced relay having a contact member differentially controlled by two coils respectively energized in accordance with two voltages whose magnitudes are dependent on such phase relationship.

GB Pub. No. 597302 describes relay apparatus for connecting a network to supply mains when the voltage of the former is lower by a predetermined amount than that of the latter, comprises an induction relay having a plurality of electromagnets, one of said magnets having a winding connected across the supply mains or the network and another of said magnets having a winding supplied with current proportional to the difference in voltage between the network and the supply mains to cause the relay to operate a circuit-breaker connected between the mains and the network.

RU Pub. No. 66619 describes three-phase power factor corrector comprising a power inverter unit, power sensors ranging power supply and control system, characterized in that the node power inverter unit consists of two power inverter modules, each of which contains six key elements included three-phase bridge circuit, three-phase inductor and a storage capacitor with a voltage sensor and control system comprises a unit ADC block determine the reference compensating current with PI voltage on the capacitor, the current PID controllers and the unit vector pulse width modulation, the output of the ADC is connected to the inputs of the block determine the reference equalizing currents with PI voltage on the capacitor, the output of which is connected via a current block of PID controllers to the input of the block vector pulse-width modulation, which is the final output block management.

RU Pub. No. 2122273 describes a device which has three under-voltage relays with make and break contacts, correcting capacitors, phase-shifting reactors, and transient-load terminals. Three newly introduced phase-correcting capacitors are inserted between phase-shifting reactors and three-phase load terminals; each capacitor is shorted out by parallel-connected make contacts of under-voltage relays of inherent and lagging phases; each phase-shifting reactor is shorted out by parallel-connected contacts of under-voltage relays of adjacent phases.

RU Pub. No. 2340063 describes a device containing terminals of network A, B, C, three voltage-check relays with group of normally closed, group of normally open and additional group of contacts, common capacitor, phase throttles and input terminals. Thus network terminals are connected to AC source, each relay is connected on phase voltage between similar phase and neutral wire. Common capacitor is connected between previous and recovered phases. Phase throttles are connected in break of corresponding phases between network terminals and input terminals. And throttle of recovered phase is bridged. Throttles of composite phases are used for additional turn of adjacent phase voltage vectors.

RU Pub. No. 2353038 describes a device including network terminals, three voltage control relays, three phase chokes, a contact unit with two groups of contacts having common contact points and a common capacitor. The first group of contacts contains three pairs of normally closed contacts, while the first pair includes serial connection of the first relay contact with the second relay contact, the second pair - the second relay contact with the third relay contact, the third pair - the third relay contact with the first relay contact. Besides, all pair inputs are coupled with the corresponding phases, while their outputs - with common point of the first group of contacts. The second group of contacts includes also three pairs of contacts. In addition, the first pair includes serial connection of the first relay closed contact and open contact the second relay, the second pair - closed contact of the second relay contact and open contact of the third relay, the third pair - closed contact of the third relay and open contact of the first relay. Besides, inputs from all pairs are coupled with corresponding phases, while their outputs are connected to the common point of the second group of contacts. There is a common capacitor being connected between the common point of the first group and common point of the second group.

RU Pub. No. 2551351 describes a device comprising network terminals, three fast-operate fast-release voltage relays with closing and opening contacts, seven repeater relays per a phase with closing and opening contacts, three phase-recovering capacitors, three phase-shifting chokes, three phase-compensating capacitors, terminals for the connection of a three-phase load and a power supply source. The voltage relays are coupled to phase voltage of the respective phases in the network, the phase-recovering capacitors are coupled to linear voltage, at that each of the capacitors is connected in series to an opening contact of the repeater relay of the respective phase, each of the phase-shifting chokes is shunted by the closing contacts of the first and second repeater relays of the respective phase and by the in-series closing contacts of the third and fourth repeater relays of the respective phase, the repeater relays are connected to the negative output of the power supply source directly and to the positive output through the closing contacts of the voltage relay respectively. Each phase-compensating capacitor is shunted by the closing contacts of the fifth and sixth repeated relay of the respective phase and the phase-shifting capacitor of each phase is coupled between the same phase of the network and the phase next to the retarding phase through the opening contact of the seventh repeated relay of the respective phase.

SU Pub. No. 633110 describes an automatic redundancy arrangement for power supply source.

WO2014/191692 describes a phase selector for selecting the appropriate phase.

US Pub. No. US4004191A describes a method for reducing current unbalance in the electric system of a three-phase A.C. power transmission line operating in an incomplete phase regime using the wires of the line and transformers electrically coupled thereto. A disconnected wire of the line operating in the incomplete phase regime is grounded at one end thereof and a suitable alternating voltage source is connected at the other end thereof to increase the current flowing through the transformer neutrals, thus reducing current unbalance in the electric system. An embodiment of the invention provides for the use of a lightning protection wire rope instead of the wire in case the latter is broken.

None of the above offer to compensate for the "lost" phase(s) using the other available phase(s).

There is long felt need for a compensation system enabling a consumer to receive three-phase power supply in cases where one or two of the three phases malfunctions without using substituting power provider(s).

### SUMMARY

According to the aspect of the present invention there is provided a three-phase compensation system, comprising: an electric circuit configured to be connected with a three-phase power source configured to supply three phases and with consumers and to enable three-phase power supply to the consumers in the absence of one or two of the three phases.

The three-phase power source may comprise one of Electricity Company, three-phase generator and three-phase alternator.

The electric circuit comprises first, second and third control relays connected with each other, each comprising first and second normally open in-contacts, first and second normally open out-contacts, first and second normally close in-contacts, first and second normally close out-contacts, a control in- contact and a control out-contact.

According to the aspect of the present invention there is provided a method of compensating for a lost phase, comprising: providing a three-phase compensation system, comprising: an electric circuit comprising first, second and third control relays connected with each other; the electric circuit configured to be connected with consumers and with a three-phase power source configured to supply three phases, one to each of the first, second and third control relays respectively; and when one of the three phases does not supply current to its respective control relay, compensating for the malfunctioning phase by supplying current from one of the other two control relays.

The three-phase power source may comprise one of Electricity Company, three-phase generator and three-phase alternator.

The first, second and third control relays each comprises first and second normally open in-contacts, first and second normally open out-contacts, first and second normally close in-contacts, first and second normally close out-contacts, a control in- contact and a control out-contact.

According to the aspect of the present invention there is provided a method of compensating for a lost phase, comprising: providing a three-phase compensation system, comprising: an electric circuit comprising first, second and third control relays connected with each other; the electric circuit configured to be connected with consumers and with a three-phase power source configured to supply three phases, one to each of the first, second and third control relays respectively; and when two of the three phases do not supply current to their respective control relays, compensating for the malfunctioning phases by supplying current from the remaining control relay. The three-phase power source may comprise one of Electricity Company, three-phase generator and three-phase alternator.

The first, second and third control relays each comprises first and second normally open in-contacts, first and second normally open out-contacts, first and second normally close in-contacts, first and second normally close out-contacts, a control in- contact and a control out-contact.

### BRIEF DESCRIPTION OF THE DRAWINGS

For better understanding of the invention and to show how the same may be carried into effect, reference will now be made, purely by way of example, to the accompanying drawings.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
**Fig.** 1 shows a schematic block diagram of an exemplary existing distribution board;
**Figs. 2A** and **2B** show schematic block diagrams of two exemplary implementation options of the three-phase compensation system of the present invention in the exemplary existing distribution board of **Fig. 1**;
**Fig. 3** shows a schematic representation of the three-phase compensation system according to embodiments of the present invention;
**Fig. 4** shows a schematic view of an IEC control relay;
**Fig. 5** shows an exemplary scenario according to the representation of Fig. 3 where there is an electric current in each phase **R**, **S** and **T**;
**Fig. 5A** shows an exemplary scenario according to the representation of Fig. 3 where there is an electric current only in phase **S**;
**Fig. 5B** shows an exemplary scenario according to the representation of Fig. 3 where there is an electric current only in phase **T**;
**Fig. 5C** shows an exemplary scenario according to the representation of Fig. 3 where there is an electric current only in phase **R**;
**Fig. 6** shows another schematic representation of a three-phase compensation system **200A** according to embodiments of the present invention;
**Fig. 7** shows an exemplary scenario according to the representation of Fig. 6 where there is an electric current in each phase **R**, **S** and **T**;
**Fig. 7A** shows an exemplary scenario according to the representation of Fig. 6 where there is an electric current only in phase **S**;
**Fig. 7B** shows an exemplary scenario according to the representation of Fig. 6 where there is an electric current only in phase **T**; and
**Fig. 7C** shows an exemplary scenario according to the representation of Fig. 6 where there is an electric current only in phase **R**.

### DETAILED DESCRIPTION OF PREFERRED EMBODIMENTS

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

The present invention provides a three-phase compensation system for cases where one or two of the three phases malfunctions.

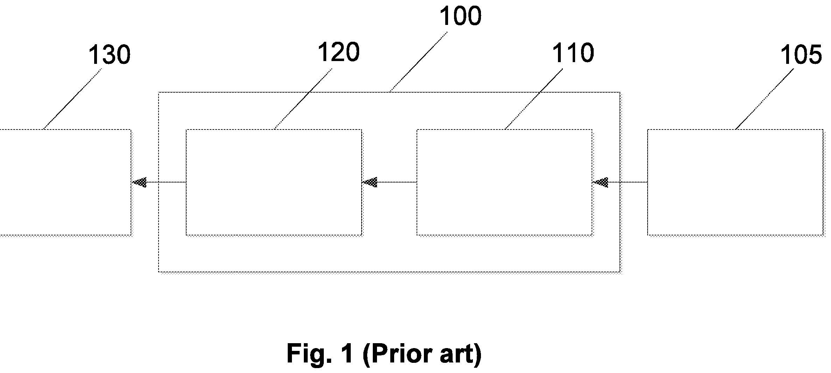

**Fig. 1** shows a schematic block diagram of an exemplary existing distribution board **100** comprising a three-phase switch **110** and a three-phase residual current device **120.**

Three phases supplied by the power provider **105** (e.g. Electricity Company, three-phase alternator, three-phase generator etc.), pass through the three-phase switch **110**, then through the three phase residual current device **120** and to consumers **130** (e.g. via circuit breakers - not shown).

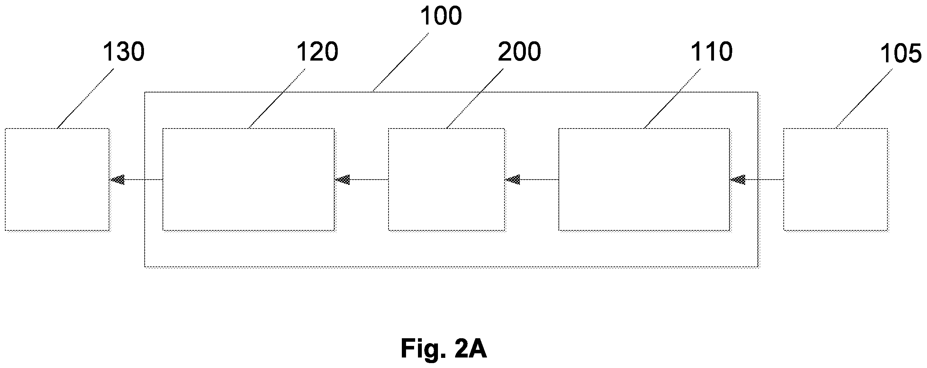

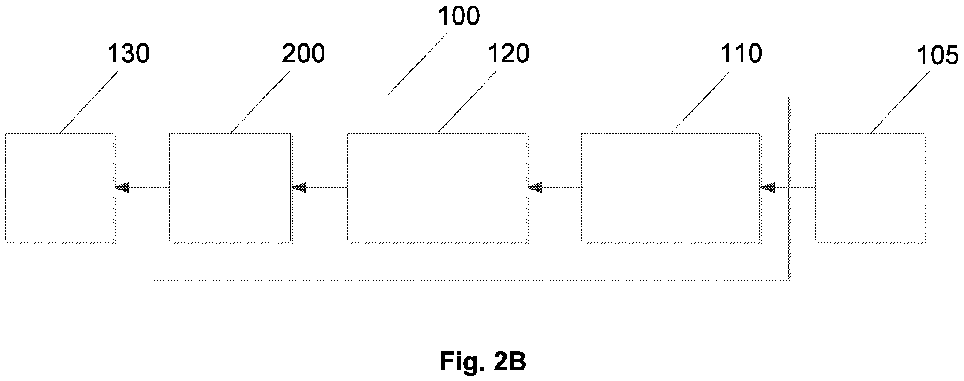

**Figs. 2A** and **2B** show schematic block diagrams of two exemplary implementation options of the three-phase compensation system **200** of the present invention in the exemplary existing distribution board **100** of **Fig. 1****.**

**Fig. 2A** shows the three-phase compensation system **200** of the present invention implemented between the three-phase switch **110** and the three-phase residual current device **12**0**.**

**Fig. 2B** shows the three-phase compensation system **200** of the present invention implemented between the three-phase residual current device **120** and the consumers **130**.

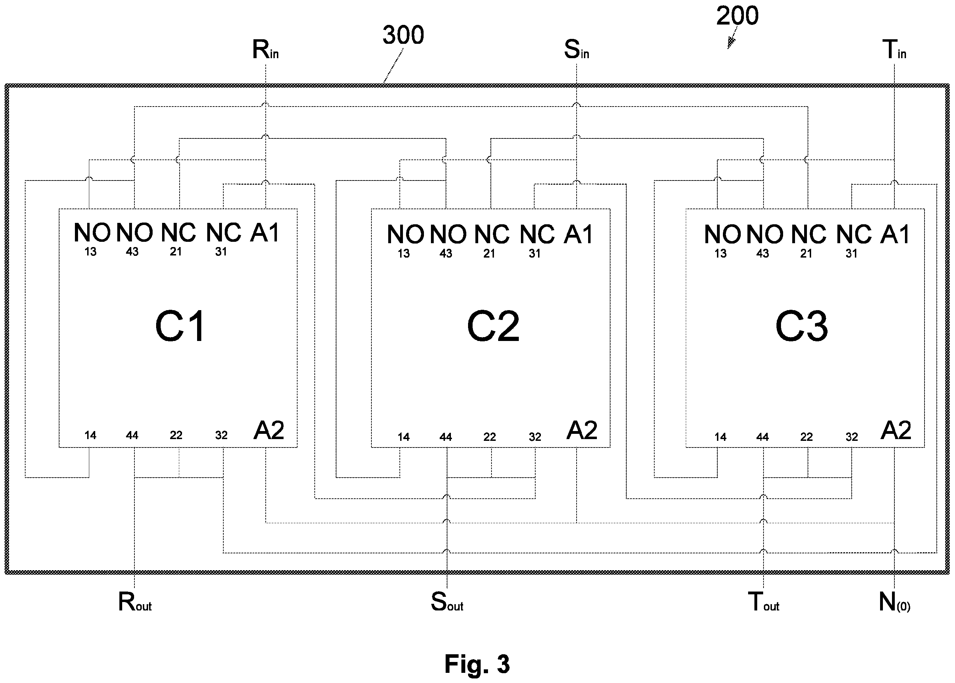

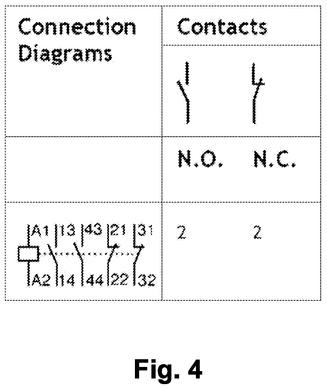

**Fig. 3** shows a schematic representation of the three-phase compensation system **200** according to embodiments of the present invention, comprising: a housing **300** comprising three control relays **C1**, **C2** and **C3** such as for example IEC control relay 700-K22Z available from http://ab.rockwellautomation.com/Relays-and-Timers/700-K-IEC-Control-Relays. Each control relay comprises two Normally Open contacts (13 and **43**), two Normally Close contacts (**21** and **31**) and a control contact (**A1**). A schematic view of the control relay is presented in **Fig. 4**. As can be seen in **Fig. 4**, the Normally Open contacts are open in the absence of electric current and the Normally Close contacts are close in the absence of electric current. When an electric current passes from contact **A1** to contact **A2** (connected to neutral **N (0)**), the Normally Open contacts are closed and the Normally Close contacts are opened.

Back to **Fig. 3**, attention is drawn to control relay **C3**. In normal operation, contact **A1** receives an electric current of phase **T**. The electric current passes from contact **A1** to contact **A2** connected to **N (0),** causes the connections between contacts **13** and **14** and between contacts **43** and **44** to be closed and the connections between contacts **21** and **22** and between contacts **31** and **32** to be opened thus enabling the electric current of phase **T** to pass from contact **13** to contact **14** to contact **43** to contact **44** to **Tₒᵤₜ**.

The same happens in control relay **C2** when it receives an electric current of phase **S** and in control relay **C1** when it receives an electric current of phase **R**.

In the absence of electric current of phase **T** in control relay **C3**, the connections between contacts **13** and **14** and between contacts **43** and **44** are open and the connections between contacts **21** and **22** and between contacts **31** and **32** are close. In such a case, electric current of phase **R** may be supplied by:
1. Contact **43** of **C1** to contact **21** of **C3** to contact **22** of **C3** to **Tₒᵤₜ**. and/or
2. Contact **32** of **C1** to contact **31** of **C3** to contact **32** of **C3** to **Tₒᵤₜ**.

It will be appreciated that contact **43** of **C1** may be alternatively connected to contact **31** of **C3**. In such a case, contact **32** of **C1** is connected to contact **21** of **C3**.

The connection of contacts **21** and **31** of **C3** to the electric current of phase **R** enables three-phase normal operation in the absence of phase **T** and moreover in the absence of at least one other phase (**R** or **S),** namely, in the absence of **T** and **S** or in the absence of **T** and **R**.

The connection of contacts **21** and **31** of **C2** to the electric current of phase **T** enables three-phase normal operation in the absence of phase **S** and moreover in the absence of at least one other phase (**R** or **T),** namely, in the absence of **S** and **R** or in the absence of **S and T**.

The connection of contacts **21** and **31** of **C1** to the electric current of phase **S** enables three-phase normal operation in the absence of phase **R** and moreover in the absence of at least one other phase (**T** or **S),** namely, in the absence of **R** and **S** or in the absence of **R** and **T.**

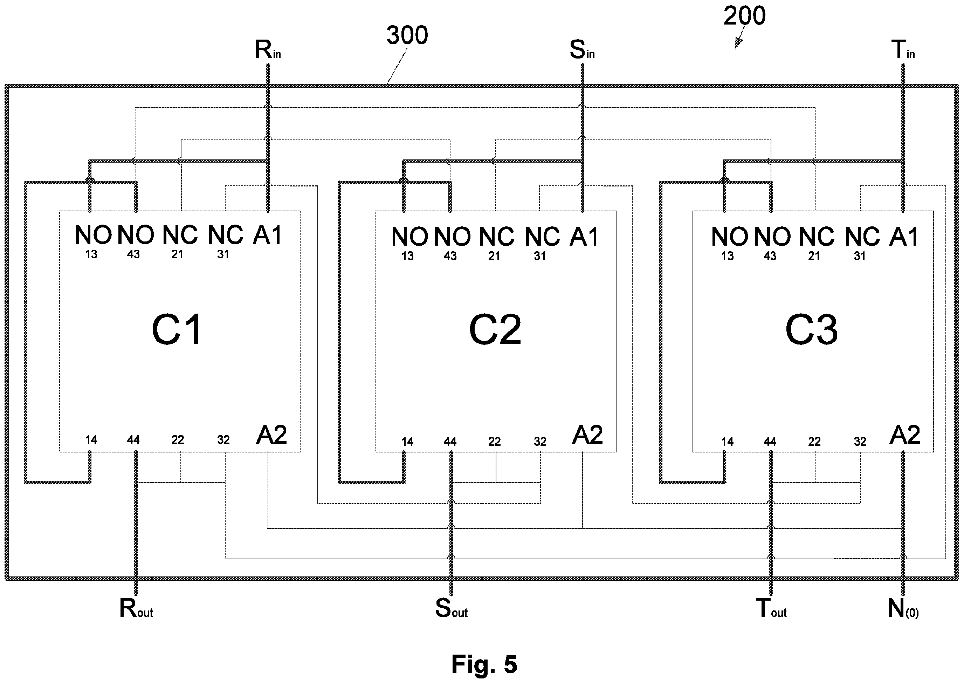

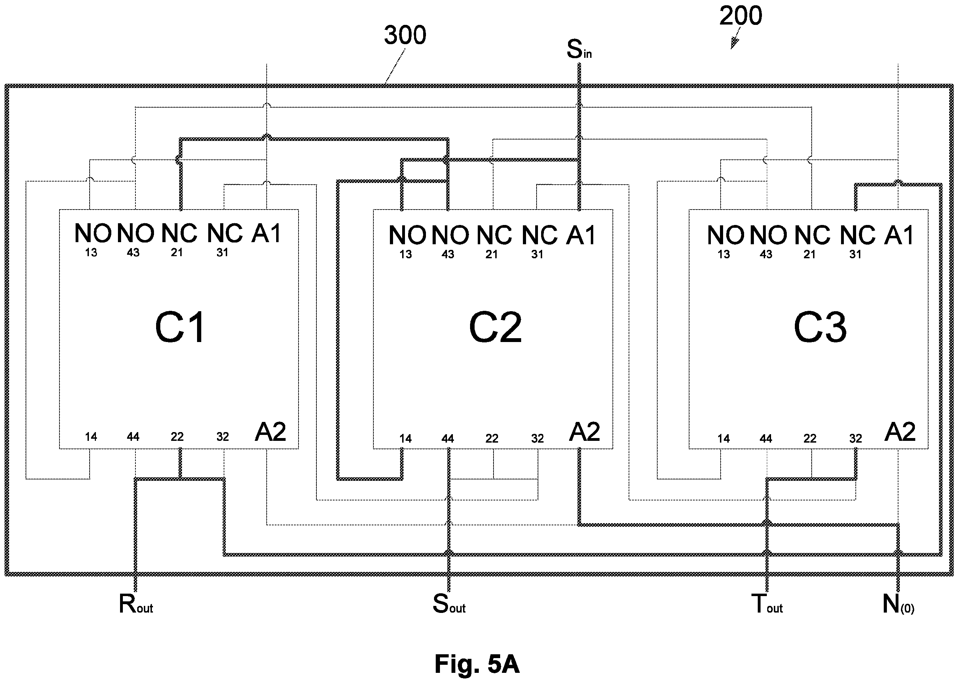

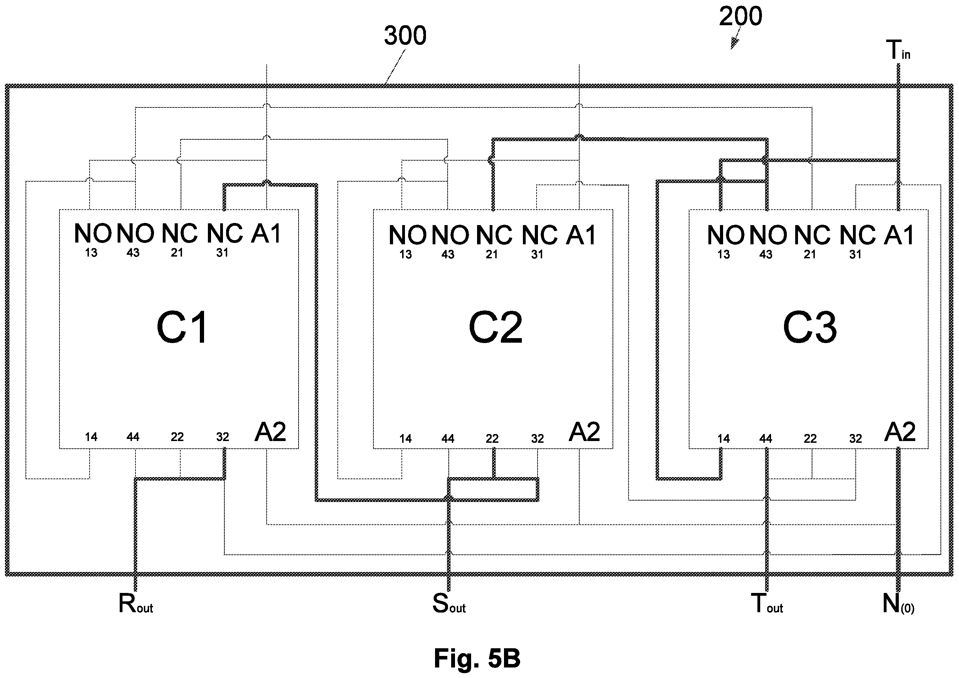

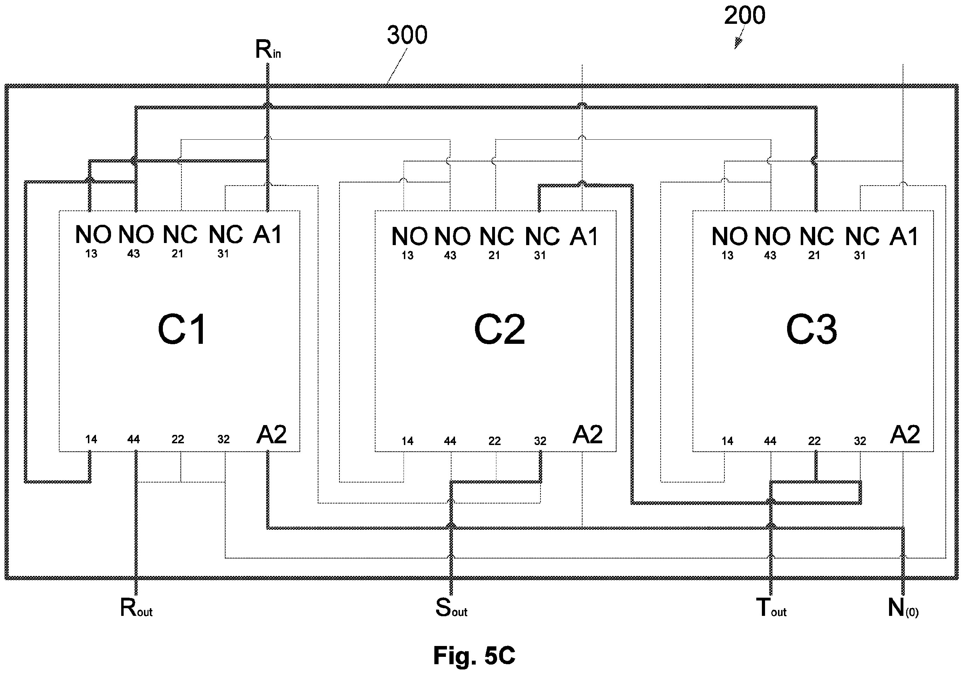

**Fig. 5** shows an exemplary scenario according to the representation of Fig. 3 where there is an electric current in each phase **R**, **S** and **T** (normal operation). The electric current of phase **T** passes from contact **A1** of **C3** to contact **A2** of **C3** to **N (0)** and causes the connections between contacts 13 and 14 and between contacts **43** and **44** to be closed, namely, the electric current passes from **Tᵢₙ** to contact **13** to contact **14** to contact **43** to contact **44** to **Tₒᵤₜ**. The same happens in phases **S and R**.

**Fig. 5A** shows an exemplary scenario according to the representation of Fig. 3 where there is an electric current only in phase **S.** The electric current of phase **S** passes from contact **A1** of **C2** to contact **A2** of **C2** to **N (0)** and causes the connections between contacts **13** and **14** and between contacts **43** and **44** to be closed, namely, the electric current pass from **Sᵢₙ** to contact **13** to contact **14** to contact **43** to contact **44** to **Sₒᵤₜ**. In **C1** and **C3** there is no electric current supplied by **Rᵢₙ** and **Tᵢₙ** respectively, hence the connections between contacts **21** and **22** and contacts **31** and **32** of **C3** are closed and the connections between contacts **21** and **22** and contacts **31** and **32** of **C1** are closed. Electric current supplied by **Sᵢₙ** passes to contact **13** of **C2** to contact **14** of **C2** to contact **43** of **C2** to contact **21** of **C1**, from contact **21** of **C1** to contact **22** of **C1** and from there both to **Rₒᵤₜ** and to contact **31** of **C3** to contact **32** of **C3** to **Tₒᵤₜ**.

The result is three-phase electric supply though only one phase is available.

**Fig. 5B** shows a similar exemplary scenario according to the representation of Fig. 3 where there is an electric current only in phase **T.**

**Fig. 5C** shows a similar exemplary scenario according to the representation of Fig. 3 where there is an electric current only in phase **R.**

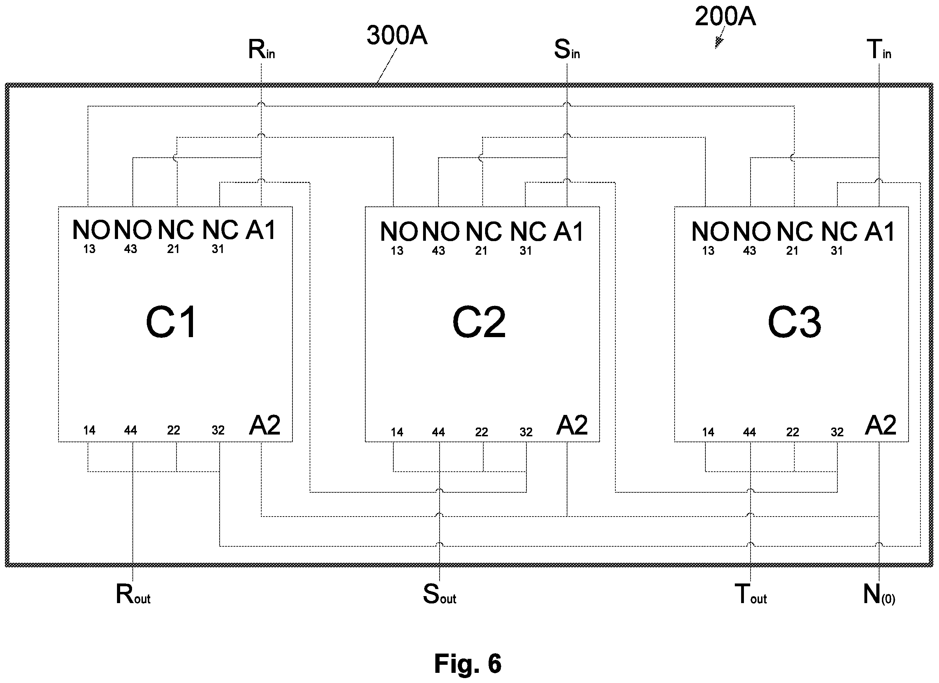

**Fig. 6** shows another schematic representation of a three-phase compensation system **200A** according to embodiments of the present invention, comprising: a housing **300A** comprising three control relays **C1**, **C2** and **C3** such as for example IEC control relay 700-K22Z available from http://ab.rockwellautomation.com/Relays-and-Timers/700-K-IEC-Control-Relays. Each control relay comprises two Normally Open contacts (**13** and **43**), two Normally Close contacts (**21** and **31**) and a control contact (**A1**). Attention is drawn to control relay **C3**. In normal operation, contact **A1** receives an electric current of phase **T**. The electric current passes from contact **A1** to contact **A2** connected to **N (0),** causes the connections between contacts **13** and **14** and between contacts **43** and **44** to be closed and the connections between contacts **21** and **22** and between contacts **31** and **32** to be opened thus enabling the electric current of phase **T** to pass from contact **43** to contact **44** to **Tₒᵤₜ**.

The same happens in control relay **C2** when it receives an electric current of phase **S** and in control relay **C1** when it receives an electric current of phase **R.**

In the absence of electric current of phase **T** in control relay **C3,** the connections between contacts **13** and **14** and between contacts **43** and **44** are open and the connections between contacts **21** and **22** and between contacts **31** and **32** are close. In such a case, electric current of phase **R** may be supplied by:
1. Contact **13** of **C1** to contact **21** of **C3** to contact **22** of **C3** to **Tₒᵤₜ**. and/or
2. Contact **32** of **C1** to contact **31** of **C3** to contact **32** of **C3** to **Tₒᵤₜ**.

It will be appreciated that contact **43** of **C1** may be alternatively connected to contact **31** of **C3.** In such a case, contact **32** of **C1** is connected to contact **21** of **C3.**

The connection of contacts **21** and **31** of **C3** to the electric current of phase **R** enables three-phase normal operation in the absence of phase **T** and moreover in the absence of at least one other phase (**R** or **S),** namely, in the absence of **T** and **S** or in the absence of **T** and **R**.

The connection of contacts **21** and **31** of **C2** to the electric current of phase **T** enables three-phase normal operation in the absence of phase **S** and moreover in the absence of at least one other phase (**R** or **T),** namely, in the absence of **S** and **R** or in the absence of **S and T.**

The connection of contacts **21** and **31** of **C1** to the electric current of phase **S** enables three-phase normal operation in the absence of phase **R** and moreover in the absence of at least one other phase (**T** or **S),** namely, in the absence of **R and S** or in the absence of **R** and **T.**

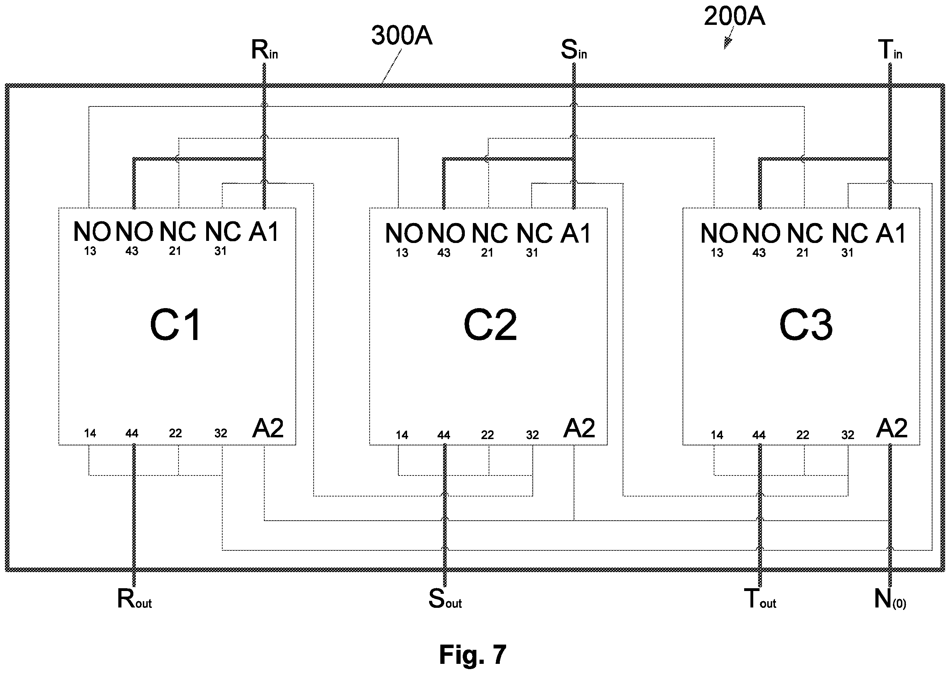

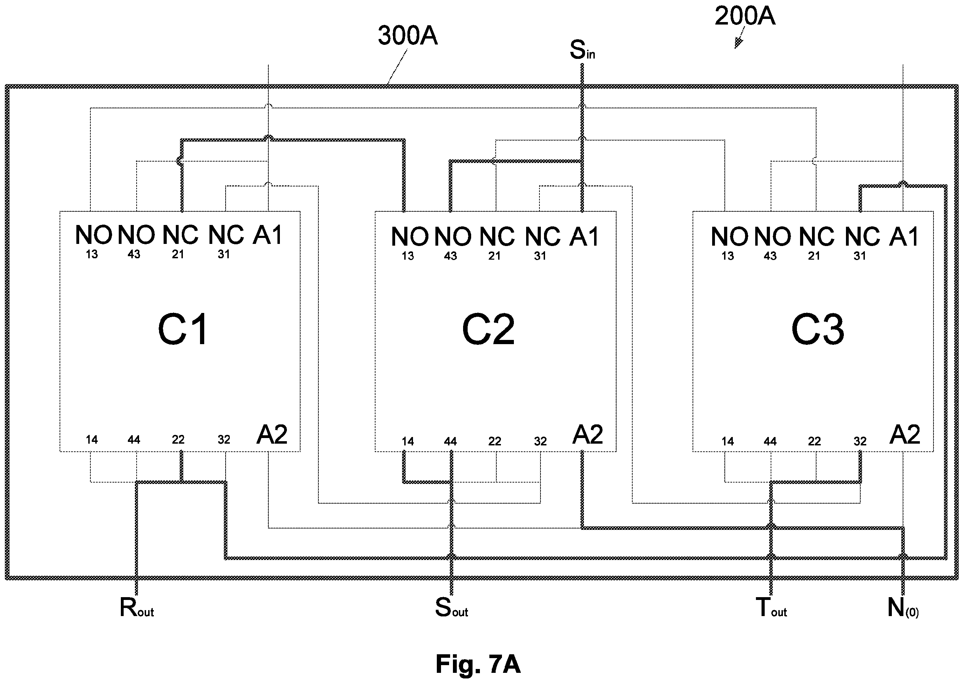

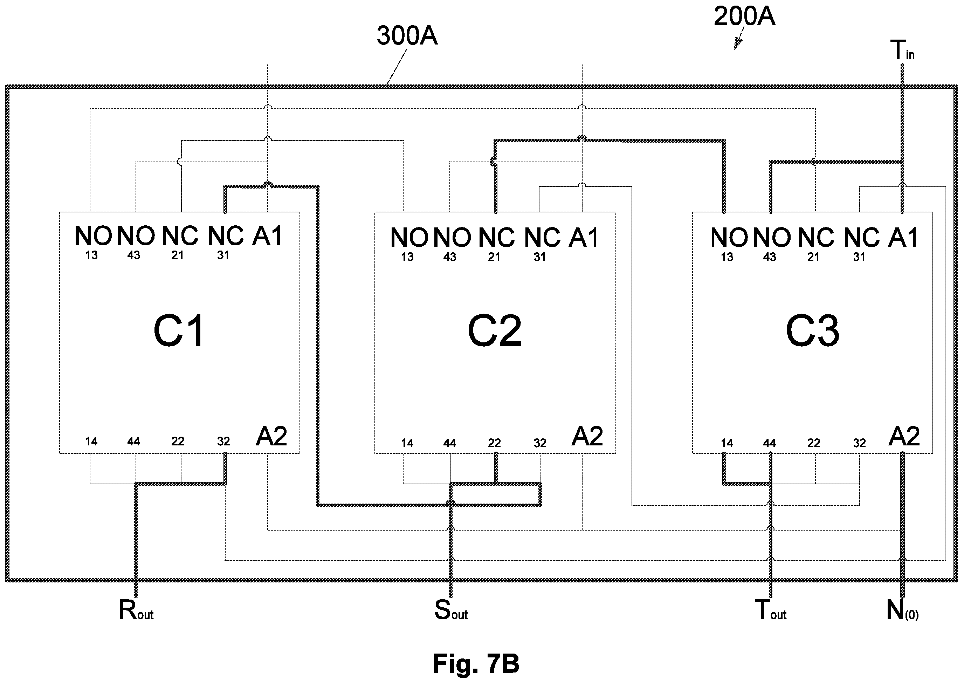

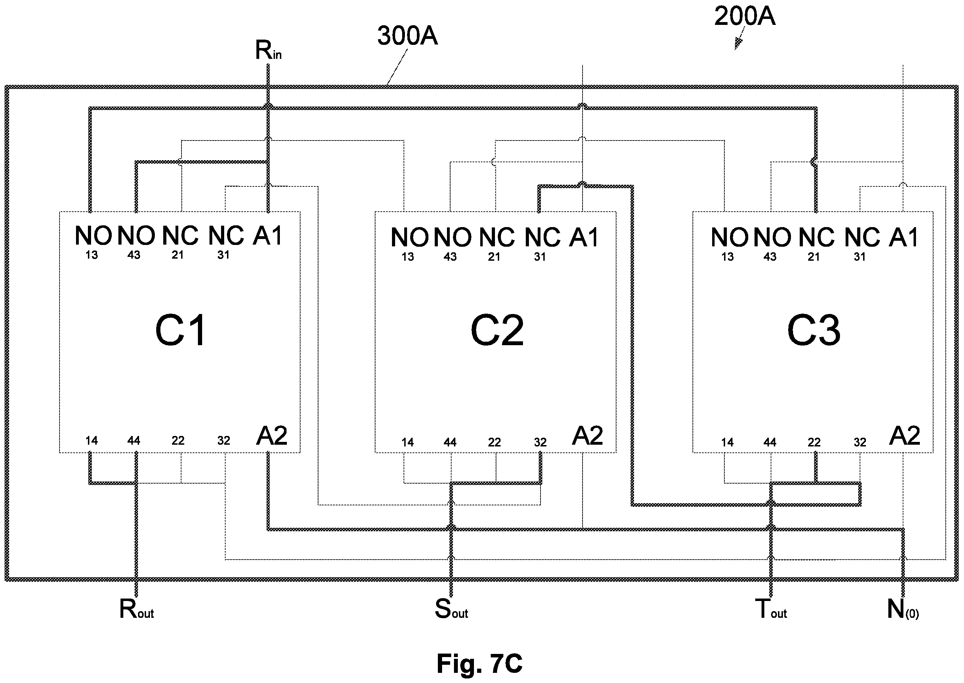

**Fig. 7** shows an exemplary scenario according to the representation of Fig. 6 where there is an electric current in each phase **R, S** and **T** (normal operation). The electric current of phase **T** passes from contact **A1** of **C3** to contact **A2** of **C3** to **N (0)** and causes the connections between contacts **13** and **14** and between contacts **43** and **44** to be closed, namely, the electric current passes from **Tᵢₙ** to contact **43** to contact **44** to **Tₒᵤₜ**. The same happens in phases **S and R**.

**Fig. 7A** shows an exemplary scenario according to the representation of Fig. 6 where there is an electric current only in phase **S.** The electric current of phase **S** passes from contact **A1** of **C2** to contact **A2** of **C2** to **N (0)** and causes the connections between contacts **13** and **14** and between contacts **43** and **44** to be closed, namely, the electric current pass from **Sᵢₙ** to contact **43** to contact **44** to **Sₒᵤₜ**. In **C1** and **C3** there is no electric current supplied by **Rᵢₙ** and **Tᵢₙ** respectively, hence the connections between contacts **21** and **22** and contacts **31** and **32** of **C3** are closed and the connections between contacts **21** and **22** and contacts **31** and **32** of **C1** are closed. Electric current supplied by **Sᵢₙ** passes to contact **43** of **C2** to contact **44** of **C2** to contact **14** of **C2** to contact **13** of **C2** to contact **21** of **C1**, from contact **21** of **C1** to contact **22** of **C1** and from there both to **Rₒᵤₜ** and to contact **31** of **C3** to contact **32** of **C3** to **Tₒᵤₜ**.

The result is three-phase electric supply though only one phase is available.

**Fig. 7B** shows an exemplary scenario according to the representation of Fig. 6 where there is an electric current only in phase **T.**

**Fig. 7C** shows an exemplary scenario according to the representation of Fig. 6 where there is an electric current only in phase **R.**

It will be appreciated that system **200A** may be implemented instead of system **200** in **Figs. 2A** and **2B****.**

It will be appreciated that the system of the present invention may be connected to any three-phase power source such as an electricity company, a three-phase alternator or any other three-phase power source.

The system of the present invention may be integrated for example in houses, ships, airplanes, etc. or in any system comprising a three-phase power source.

It will be appreciated that in cases that one or two of the phases malfunction, there might be a situation where the consumers need more than the working phase(s) can supply. In such a situation, the three-phase switch breaks the electrical circuit due to an overload. In order to prevent the three-phase switch from breaking the electrical circuit, the user may disconnect electric appliances, regardless of which phase they are connected to up the a point where the working phase(s) can supply the consumers' needs.

It will be appreciated by persons skilled in the art that the present invention is not limited to what has been particularly shown and described hereinabove. Rather the scope of the present invention is defined by the appended claims and includes combinations and sub-combinations of the various features described hereinabove.

## Claims

1. A three-phase compensation system, comprising:
an electric circuit (200) configured to receive three input phases of a three phase power source from which are supplied three respective output phases, said electric circuit further configured to compensate for any one input phase unable to supply current to its corresponding output single phase by substituting in place of said output phase a functioning output phase of said three output phases, and further configured to compensate for any one or two input phases unable to supply current to their corresponding one or two output phases by substituting in place of said two output phases, the output phase of the third phase,
wherein said electric circuit (200) comprises first (C1), second (C2) and third (C3) control relays electrically connected with each other, each comprising first and second normally open in-contacts, first and second normally open out-contacts, first and second normally close in-contacts, first and second normally close out-contacts, a control in- contact and a control out-contact, wherein at least one normally open in contact of one relay is connected wherein at least one normally open in-contact of at least one control relay is connected with at least one normally close in-contact of at least one other control relay;
wherein at least one normally close in-contact of at least one control relay is connected with at least one normally close out-contact of at least one other control relay wherein, when two of the three phases do not supply current to their respective control relays, compensating for the malfunctioning phases by supplying current from the remaining control relay;
wherein Normally Open contacts are open in the absence of electric current and Normally Closed contacts are closed in the absence of electric current;
wherein in the absence of one or two phase, the connections of normally closed circuits of a relay of non-working phase is configured to receive current from the connections of the normally open circuit of one of the working-phase enabling the non-working phase to operate normally.

2. The three-phase compensation system of claim 1, wherein a first phase-in is connected with said first control relay control in-contact and with said first control relay first normally open in-contact; said first control relay first normally open out-contact is connected with said first control relay second normally open in-contact; said first control relay second normally open in-contact is connected with said third control relay first normally close in-contact; said first control relay first normally close in-contact is connected with said second control relay second normally open in-contact; said first control relay second normally close in-contact is connected with said second control relay second normally close out-contact, with said second control relay first normally close out-contact and with said second control relay second normally open out-contact; said first control relay second normally open out-contact is connected with a first phase-out, with said first control relay first normally close out-contact, with said first control relay second normally close out-contact and with said third control relay second normally close in-contact; said second control relay second normally open out-contact is connected with a second phase-out; a second phase-in is connected with said second control relay control in-contact and with said second control relay first normally open in-contact; said second control relay first normally open out-contact is connected with said second control relay second normally open in-contact; said second control relay first normally close in-contact is connected with said third control relay second normally open in-contact; said second control relay second normally close in-contact is connected with said third control relay second normally close out-contact, with said third control relay first normally close out-contact and with said third control relay second normally open out-contact; said third control relay second normally open out-contact is connected with a third phase-out; a third phase-in is connected with said third control relay control in-contact and with said third control relay first normally open in-contact; said third control relay first normally open out-contact is connected with said third control relay second normally open in-contact; said first control relay control out-contact is connected with said second control relay control out-contact, with said third control relay control out-contact and with neutral.

3. The three-phase compensation system of claim 2, wherein a first phase-in is connected with said first control relay control in-contact and with said first control relay second normally open in-contact; said first control relay first normally open out-contact is connected with said first control relay second normally open out-contact, with said first control relay first normally close out-contact and with said first control relay second normally close out-contact; said first control relay first normally open in-contact is connected with said third control relay first normally close in-contact; said first control relay first normally close in-contact is connected with said second control relay first normally open in-contact; said first control relay second normally close in-contact is connected with said second control relay second normally close out-contact, with said second control relay first normally close out-contact, with said second control relay first normally open out-contact and with said second control relay second normally open out-contact; said first control relay second normally open out-contact is connected with a first phase-out and with said third control relay second normally close in-contact; said second control relay second normally open out-contact is connected with a second phase-out; a second phase-in is connected with said second control relay control in-contact and with said second control relay second normally open in-contact; said second control relay first normally close in-contact is connected with said third control relay first normally open in-contact; said second control relay second normally close in-contact is connected with said third control relay second normally close out-contact, with said third control relay first normally close out-contact, with said third control relay first normally open out-contact and with said third control relay second normally open out-contact; said third control relay second normally open out-contact is connected with a third phase-out; a third phase-in is connected with said third control relay control in-contact and with said third control relay second normally open in-contact; said first control relay control out-contact is connected with said second control relay control out-contact, with said third control relay control out-contact and with neutral.

4. The three-phase compensation system of claim 1 wherein said single three-phase compensation system provide single phase for multiple electric appliances.

5. A method of compensating for a lost phase of a three phase-power source, comprising providing a three-phase compensation system, comprising:
an electric circuit (200) comprising first (C1), second (C2) and third (C3) control relays connected with each other, configured to receive three phases of the three-phase power source, one to each of said first (C1), second (C2) and third (C3) control relays respectively, and to compensate for a malfunctioning of one of said three phases that does not supply current to its respective control relay, by supplying current to the respective control relay from one of the other two control relays,
wherein said electric circuit (200) comprises first (C1), second (C2) and third (C3) control relays electrically connected with each other, each comprising first and second normally open in-contacts, first and second normally open out-contacts, first and second normally close in-contacts, first and second normally close out-contacts, a control in- contact and a control out-contact wherein at least one normally open in contact of one relay is connected wherein at least one normally open in-contact of at least one control relay is connected with at least one normally close in-contact of at least one other control relay;
wherein at least one normally close in-contact of at least one control relay is connected with at least one normally close out-contact of at least one other control relay wherein, when two of the three phases do not supply current to their respective control relays, compensating for the malfunctioning phases by supplying current from the remaining control relay;
wherein Normally Open contacts are open in the absence of electric current and Normally Closed contacts are closed in the absence of electric current;
wherein in the absence of one or two phase, the connections of normally closed circuits of a relay of non-working phase is configured to receive current from the connections of the normally open circuit of one of the working-phase enabling the non-working phase to operate normally.

6. The method of claim 5, wherein a first phase-in is connected with said first control relay control in-contact and with said first control relay first normally open in-contact; said first control relay first normally open out-contact is connected with said first control relay second normally open in-contact; said first control relay second normally open in-contact is connected with said third control relay first normally close in-contact; said first control relay first normally close in-contact is connected with said second control relay second normally open in-contact; said first control relay second normally close in-contact is connected with said second control relay second normally close out-contact, with said second control relay first normally close out-contact and with said second control relay second normally open out-contact; said first control relay second normally open out-contact is connected with a first phase-out, with said first control relay first normally close out-contact, with said first control relay second normally close out-contact and with said third control relay second normally close in-contact; said second control relay second normally open out-contact is connected with a second phase-out; a second phase-in is connected with said second control relay control in-contact and with said second control relay first normally open in-contact; said second control relay first normally open out-contact is connected with said second control relay second normally open in-contact; said second control relay first normally close in-contact is connected with said third control relay second normally open in-contact; said second control relay second normally close in-contact is connected with said third control relay second normally close out-contact, with said third control relay first normally close out-contact and with said third control relay second normally open out-contact; said third control relay second normally open out-contact is connected with a third phase-out; a third phase-in is connected with said third control relay control in-contact and with said third control relay first normally open in-contact; said third control relay first normally open out-contact is connected with said third control relay second normally open in-contact; said first control relay control out-contact is connected with said second control relay control out-contact, with said third control relay control out-contact and with neutral.

7. The method of claim 5, wherein a first phase-in is connected with said first control relay control in-contact and with said first control relay second normally open in-contact; said first control relay first normally open out-contact is connected with said first control relay second normally open out-contact, with said first control relay first normally close out-contact and with said first control relay second normally close out-contact; said first control relay first normally open in-contact is connected with said third control relay first normally close in-contact; said first control relay first normally close in-contact is connected with said second control relay first normally open in-contact; said first control relay second normally close in-contact is connected with said second control relay second normally close out-contact, with said second control relay first normally close out-contact, with said second control relay first normally open out-contact and with said second control relay second normally open out-contact; said first control relay second normally open out-contact is connected with a first phase-out and with said third control relay second normally close in-contact; said second control relay second normally open out-contact is connected with a second phase-out; a second phase-in is connected with said second control relay control in-contact and with said second control relay second normally open in-contact; said second control relay first normally close in-contact is connected with said third control relay first normally open in-contact; said second control relay second normally close in-contact is connected with said third control relay second normally close out-contact, with said third control relay first normally close out-contact, with said third control relay first normally open out-contact and with said third control relay second normally open out-contact; said third control relay second normally open out-contact is connected with a third phase-out; a third phase-in is connected with said third control relay control in-contact and with said third control relay second normally open in-contact; said first control relay control out-contact is connected with said second control relay control out-contact, with said third control relay control out-contact and with neutral.

## Patentansprüche

1. Dreiphasenkompensationssystem, umfassend:
eine elektrische Schaltung (200), die dazu konfiguriert ist, drei Eingangsphasen einer Dreiphasenleistungsquelle zu empfangen, von denen drei jeweilige Ausgangsphasen versorgt werden, wobei die elektrische Schaltung ferner dazu konfiguriert ist, irgendeine Eingangsphase zu kompensieren, die nicht in der Lage ist, ihrer entsprechenden Ausgangseinzelphase Strom zuzuführen, indem sie an die Stelle der Ausgangsphase eine funktionierende Ausgangsphase der drei Ausgangsphasen setzt, und ferner dazu konfiguriert ist, irgendeine oder irgendwelche zwei Eingangsphasen zu kompensieren, die nicht in der Lage ist/sind, ihren entsprechenden einen oder zwei Ausgangsphasen Strom zuzuführen, indem sie an die Stelle der zwei Ausgangsphasen die Ausgangsphase der dritten Phase setzt,
wobei die elektrische Schaltung (200) ein erstes (C1), ein zweites (C2) und ein drittes (C3) Steuerrelais umfasst, die elektrisch miteinander verbunden sind, wobei jedes erste und zweite normalerweise offene Eingangskontakte, erste und zweite normalerweise offene Ausgangskontakte, erste und zweite normalerweise geschlossene Eingangskontakte, erste und zweite normalerweise geschlossene Ausgangskontakte, einen Steuer-Eingangskontakt und einen Steuer-Ausgangskontakt umfasst,
wobei wenigstens ein normalerweise offener Eingangskontakt eines Relais verbunden ist;
wobei wenigstens ein normalerweise offener Eingangskontakt wenigstens eines Steuerrelais mit wenigstens einem normalerweise geschlossenen Eingangskontakt wenigstens eines anderen Steuerrelais verbunden ist;
wobei wenigstens ein normalerweise geschlossener Eingangskontakt wenigstens eines Steuerrelais mit wenigstens einem normalerweise geschlossenen Ausgangskontakt wenigstens eines anderen Steuerrelais verbunden ist;
wobei, wenn zwei der drei Phasen ihren jeweiligen Steuerrelais keinen Strom zuführen, Kompensieren der nicht funktionierenden Phasen durch Zuführen von Strom von dem verbleibenden Steuerrelais;
wobei normalerweise offene Kontakte in der Abwesenheit von elektrischem Strom offen sind und normalerweise geschlossene Kontakte in der Abwesenheit von elektrischem Strom geschlossen sind;
wobei in der Abwesenheit von einer oder zwei Phasen die Verbindungen von normalerweise geschlossenen Schaltungen eines Relais einer nicht-arbeitenden Phase dazu konfiguriert sind, Strom von den Verbindungen der normalerweise offenen Schaltung von einem der arbeitenden Phase zu empfangen, was es der nicht-arbeitenden Phase ermöglicht, normal in Betrieb zu sein.

2. Dreiphasenkompensationssystem nach Anspruch 1, wobei ein erster Phaseneingang mit dem Steuer-Eingangskontakt des ersten Steuerrelais und mit dem ersten normalerweise offenen Eingangskontakt des ersten Steuerrelais verbunden ist; der erste normalerweise offene Ausgangskontakt des ersten Steuerrelais mit dem zweiten normalerweise offenen Eingangskontakt des ersten Steuerrelais verbunden ist; der zweite normalerweise offene Eingangskontakt des ersten Steuerrelais mit dem ersten normalerweise geschlossenen Eingangskontakt des dritten Steuerrelais verbunden ist; der erste normalerweise geschlossene Eingangskontakt des ersten Steuerrelais mit dem zweiten normalerweise offenen Eingangskontakt des zweiten Steuerrelais verbunden ist; der zweite normalerweise geschlossene Eingangskontakt des ersten Steuerrelais mit dem zweiten normalerweise geschlossenen Ausgangskontakt des zweiten Steuerrelais, mit dem ersten normalerweise geschlossenen Ausgangskontakt des zweiten Steuerrelais und mit dem zweiten normalerweise offenen Ausgangskontakt des zweiten Steuerrelais verbunden ist; der zweite normalerweise offene Ausgangskontakt des ersten Steuerrelais mit einem ersten Phasenausgang, mit dem ersten normalerweise geschlossenen Ausgangskontakt des ersten Steuerrelais, mit dem zweiten normalerweise geschlossenen Ausgangskontakt des ersten Steuerrelais und mit dem zweiten normalerweise geschlossenen Eingangskontakt des dritten Steuerrelais verbunden ist; der zweite normalerweise offene Ausgangskontakt des zweiten Steuerrelais mit einem zweiten Phasenausgang verbunden ist; ein zweiter Phaseneingang mit dem Steuer-Eingangskontakt des zweiten Steuerrelais und mit dem ersten normalerweise offenen Eingangskontakt des zweiten Steuerrelais verbunden ist; der erste normalerweise offene Ausgangskontakt des zweiten Steuerrelais mit dem zweiten normalerweise offenen Eingangskontakt des zweiten Steuerrelais verbunden ist; der erste normalerweise geschlossene Eingangskontakt des zweiten Steuerrelais mit dem zweiten normalerweise offenen Eingangskontakt des dritten Steuerrelais verbunden ist; der zweite normalerweise geschlossene Eingangskontakt des zweiten Steuerrelais mit dem zweiten normalerweise geschlossenen Ausgangskontakt des dritten Steuerrelais, mit dem ersten normalerweise geschlossenen Ausgangskontakt des dritten Steuerrelais und mit dem zweiten normalerweise offenen Ausgangskontakt des dritten Steuerrelais verbunden ist; der zweite normalerweise offene Ausgangskontakt des dritten Steuerrelais mit einem dritten Phasenausgang verbunden ist; ein dritter Phaseneingang mit dem Steuer-Eingangskontakt des dritten Steuerrelais und mit dem ersten normalerweise offenen Eingangskontakt des dritten Steuerrelais verbunden ist; der erste normalerweise offene Ausgangskontakt des dritten Steuerrelais mit dem zweiten normalerweise offenen Eingangskontakt des dritten Steuerrelais verbunden ist; der Steuer-Ausgangskontakt des ersten Steuerrelais mit dem Steuer-Ausgangskontakt des zweiten Steuerrelais, mit dem Steuer-Ausgangskontakt des dritten Steuerrelais und mit einem Neutralleiter verbunden ist.

3. Dreiphasenkompensationssystem nach Anspruch 2, wobei ein erster Phaseneingang mit dem Steuer-Eingangskontakt des ersten Steuerrelais und mit dem zweiten normalerweise offenen Eingangskontakt des ersten Steuerrelais verbunden ist; der erste normalerweise offene Ausgangskontakt des ersten Steuerrelais mit dem zweiten normalerweise offenen Ausgangskontakt des ersten Steuerrelais, mit dem ersten normalerweise geschlossenen Ausgangskontakt des ersten Steuerrelais und mit dem zweiten normalerweise geschlossenen Ausgangskontakt des ersten Steuerrelais verbunden ist; der erste normalerweise offene Eingangskontakt des ersten Steuerrelais mit dem ersten normalerweise geschlossenen Eingangskontakt des dritten Steuerrelais verbunden ist; der erste normalerweise geschlossene Eingangskontakt des ersten Steuerrelais mit dem ersten normalerweise offenen Eingangskontakt des zweiten Steuerrelais verbunden ist; der zweite normalerweise geschlossene Eingangskontakt des ersten Steuerrelais mit dem zweiten normalerweise geschlossenen Ausgangskontakt des zweiten Steuerrelais, mit dem ersten normalerweise geschlossenen Ausgangskontakt des zweiten Steuerrelais, mit dem ersten normalerweise offenen Ausgangskontakt des zweiten Steuerrelais und mit dem zweiten normalerweise offenen Ausgangskontakt des zweiten Steuerrelais verbunden ist; der zweite normalerweise offene Ausgangskontakt des ersten Steuerrelais mit einem ersten Phasenausgang und mit dem zweiten normalerweise geschlossenen Eingangskontakt des dritten Steuerrelais verbunden ist; der zweite normalerweise offene Ausgangskontakt des zweiten Steuerrelais mit einem zweiten Phasenausgang verbunden ist; ein zweiter Phaseneingang mit dem Steuer-Eingangskontakt des zweiten Steuerrelais und mit dem zweiten normalerweise offenen Eingangskontakt des zweiten Steuerrelais verbunden ist; der erste normalerweise geschlossene Eingangskontakt des zweiten Steuerrelais mit dem ersten normalerweise offenen Eingangskontakt des dritten Steuerrelais verbunden ist; der zweite normalerweise geschlossene Eingangskontakt des zweiten Steuerrelais mit dem zweiten normalerweise geschlossenen Ausgangskontakt des dritten Steuerrelais, mit dem ersten normalerweise geschlossenen Ausgangskontakt des dritten Steuerrelais, mit dem ersten normalerweise offenen Ausgangskontakt des dritten Steuerrelais und mit dem zweiten normalerweise offenen Ausgangskontakt des dritten Steuerrelais verbunden ist; der zweite normalerweise offene Ausgangskontakt des dritten Steuerrelais mit einem dritten Phasenausgang verbunden ist; ein dritter Phaseneingang mit dem Steuer-Eingangskontakt des dritten Steuerrelais und mit dem zweiten normalerweise offenen Eingangskontakt des dritten Steuerrelais verbunden ist; der Steuer-Ausgangskontakt des ersten Steuerrelais mit dem Steuer-Ausgangskontakt des zweiten Steuerrelais, mit dem Steuer-Ausgangskontakt des dritten Steuerrelais und mit einem Neutralleiter verbunden ist.

4. Dreiphasenkompensationssystem nach Anspruch 1, wobei das Einzel-Dreiphasenkompensationssystem eine Einzelphase für mehrere elektrische Geräte bereitstellt.

5. Verfahren zum Kompensieren einer verlorenen Phase einer Dreiphasenleistungsquelle, umfassend Bereitstellen eines Dreiphasenkompensationssystems, umfassend:
eine elektrische Schaltung (200) umfassend ein erstes (C1), ein zweites (C2) und ein drittes (C3) Steuerrelais, die elektrisch miteinander verbunden sind, die dazu konfiguriert ist, drei Phasen der Dreiphasenleistungsquelle zu empfangen, jeweils eine zu jedem des ersten (C1), zweiten (C2) und dritten (C3) Steuerrelais, und ein Nicht-Funktionieren einer der drei Phasen, die ihrem jeweiligen Steuerrelais keinen Strom zuführt, zu kompensieren, indem sie dem jeweiligen Steuerrelais von einem der anderen zwei Steuerrelais Strom zuführt,
wobei die elektrische Schaltung (200) ein erstes (C1), ein zweites (C2) und ein drittes (C3) Steuerrelais umfasst, die elektrisch miteinander verbunden sind, wobei jedes erste und zweite normalerweise offene Eingangskontakte, erste und zweite normalerweise offene Ausgangskontakte, erste und zweite normalerweise geschlossene Eingangskontakte, erste und zweite normalerweise geschlossene Ausgangskontakte, einen Steuer-Eingangskontakt und einen Steuer-Ausgangskontakt umfasst,
wobei wenigstens ein normalerweise offener Eingangskontakt eines Relais verbunden ist;
wobei wenigstens ein normalerweise offener Eingangskontakt wenigstens eines Steuerrelais mit wenigstens einem normalerweise geschlossenen Eingangskontakt wenigstens eines anderen Steuerrelais verbunden ist;
wobei wenigstens ein normalerweise geschlossener Eingangskontakt wenigstens eines Steuerrelais mit wenigstens einem normalerweise geschlossenen Ausgangskontakt wenigstens eines anderen Steuerrelais verbunden ist;
wobei, wenn zwei der drei Phasen ihren jeweiligen Steuerrelais keinen Strom zuführen, Kompensieren der nicht funktionierenden Phasen durch Zuführen von Strom von dem verbleibenden Steuerrelais;
wobei normalerweise offene Kontakte in der Abwesenheit von elektrischem Strom offen sind und normalerweise geschlossene Kontakte in der Abwesenheit von elektrischem Strom geschlossen sind;
wobei in der Abwesenheit von einer oder zwei Phasen die Verbindungen von normalerweise geschlossenen Schaltungen eines Relais einer nicht-arbeitenden Phase dazu konfiguriert sind, Strom von den Verbindungen der normalerweise offenen Schaltung von einem der arbeitenden Phase zu empfangen, was es der nicht-arbeitenden Phase ermöglicht, normal in Betrieb zu sein.

6. Verfahren nach Anspruch 5, wobei ein erster Phaseneingang mit dem Steuer-Eingangskontakt des ersten Steuerrelais und mit dem ersten normalerweise offenen Eingangskontakt des ersten Steuerrelais verbunden ist; der erste normalerweise offene Ausgangskontakt des ersten Steuerrelais mit dem zweiten normalerweise offenen Eingangskontakt des ersten Steuerrelais verbunden ist; der zweite normalerweise offene Eingangskontakt des ersten Steuerrelais mit dem ersten normalerweise geschlossenen Eingangskontakt des dritten Steuerrelais verbunden ist; der erste normalerweise geschlossene Eingangskontakt des ersten Steuerrelais mit dem zweiten normalerweise offenen Eingangskontakt des zweiten Steuerrelais verbunden ist; der zweite normalerweise geschlossene Eingangskontakt des ersten Steuerrelais mit dem zweiten normalerweise geschlossenen Ausgangskontakt des zweiten Steuerrelais, mit dem ersten normalerweise geschlossenen Ausgangskontakt des zweiten Steuerrelais und mit dem zweiten normalerweise offenen Ausgangskontakt des zweiten Steuerrelais verbunden ist; der zweite normalerweise offene Ausgangskontakt des ersten Steuerrelais mit einem ersten Phasenausgang, mit dem ersten normalerweise geschlossenen Ausgangskontakt des ersten Steuerrelais, mit dem zweiten normalerweise geschlossenen Ausgangskontakt des ersten Steuerrelais und mit dem zweiten normalerweise geschlossenen Eingangskontakt des dritten Steuerrelais verbunden ist; der zweite normalerweise offene Ausgangskontakt des zweiten Steuerrelais mit einem zweiten Phasenausgang verbunden ist; ein zweiter Phaseneingang mit dem Steuer-Eingangskontakt des zweiten Steuerrelais und mit dem ersten normalerweise offenen Eingangskontakt des zweiten Steuerrelais verbunden ist; der erste normalerweise offene Ausgangskontakt des zweiten Steuerrelais mit dem zweiten normalerweise offenen Eingangskontakt des zweiten Steuerrelais verbunden ist; der erste normalerweise geschlossene Eingangskontakt des zweiten Steuerrelais mit dem zweiten normalerweise offenen Eingangskontakt des dritten Steuerrelais verbunden ist; der zweite normalerweise geschlossene Eingangskontakt des zweiten Steuerrelais mit dem zweiten normalerweise geschlossenen Ausgangskontakt des dritten Steuerrelais, mit dem ersten normalerweise geschlossenen Ausgangskontakt des dritten Steuerrelais und mit dem zweiten normalerweise offenen Ausgangskontakt des dritten Steuerrelais verbunden ist; der zweite normalerweise offene Ausgangskontakt des dritten Steuerrelais mit einem dritten Phasenausgang verbunden ist; ein dritter Phaseneingang mit dem Steuer-Eingangskontakt des dritten Steuerrelais und mit dem ersten normalerweise offenen Eingangskontakt des dritten Steuerrelais verbunden ist; der erste normalerweise offene Ausgangskontakt des dritten Steuerrelais mit dem zweiten normalerweise offenen Eingangskontakt des dritten Steuerrelais verbunden ist; der Steuer-Ausgangskontakt des ersten Steuerrelais mit dem Steuer-Ausgangskontakt des zweiten Steuerrelais, mit dem Steuer-Ausgangskontakt des dritten Steuerrelais und mit einem Neutralleiter verbunden ist.

7. Verfahren nach Anspruch 5, wobei ein erster Phaseneingang mit dem Steuer-Eingangskontakt des ersten Steuerrelais und mit dem zweiten normalerweise offenen Eingangskontakt des ersten Steuerrelais verbunden ist; der erste normalerweise offene Ausgangskontakt des ersten Steuerrelais mit dem zweiten normalerweise offenen Ausgangskontakt des ersten Steuerrelais, mit dem ersten normalerweise geschlossenen Ausgangskontakt des ersten Steuerrelais und mit dem zweiten normalerweise geschlossenen Ausgangskontakt des ersten Steuerrelais verbunden ist; der erste normalerweise offene Eingangskontakt des ersten Steuerrelais mit dem ersten normalerweise geschlossenen Eingangskontakt des dritten Steuerrelais verbunden ist; der erste normalerweise geschlossene Eingangskontakt des ersten Steuerrelais mit dem ersten normalerweise offenen Eingangskontakt des zweiten Steuerrelais verbunden ist; der zweite normalerweise geschlossene Eingangskontakt des ersten Steuerrelais mit dem zweiten normalerweise geschlossenen Ausgangskontakt des zweiten Steuerrelais, mit dem ersten normalerweise geschlossenen Ausgangskontakt des zweiten Steuerrelais, mit dem ersten normalerweise offenen Ausgangskontakt des zweiten Steuerrelais und mit dem zweiten normalerweise offenen Ausgangskontakt des zweiten Steuerrelais verbunden ist; der zweite normalerweise offene Ausgangskontakt des ersten Steuerrelais mit einem ersten Phasenausgang und mit dem zweiten normalerweise geschlossenen Eingangskontakt des dritten Steuerrelais verbunden ist; der zweite normalerweise offene Ausgangskontakt des zweiten Steuerrelais mit einem zweiten Phasenausgang verbunden ist; ein zweiter Phaseneingang mit dem Steuer-Eingangskontakt des zweiten Steuerrelais und mit dem zweiten normalerweise offenen Eingangskontakt des zweiten Steuerrelais verbunden ist; der erste normalerweise geschlossene Eingangskontakt des zweiten Steuerrelais mit dem ersten normalerweise offenen Eingangskontakt des dritten Steuerrelais verbunden ist; der zweite normalerweise geschlossene Eingangskontakt des zweiten Steuerrelais mit dem zweiten normalerweise geschlossenen Ausgangskontakt des dritten Steuerrelais, mit dem ersten normalerweise geschlossenen Ausgangskontakt des dritten Steuerrelais, mit dem ersten normalerweise offenen Ausgangskontakt des dritten Steuerrelais und mit dem zweiten normalerweise offenen Ausgangskontakt des dritten Steuerrelais verbunden ist; der zweite normalerweise offene Ausgangskontakt des dritten Steuerrelais mit einem dritten Phasenausgang verbunden ist; ein dritter Phaseneingang mit dem Steuer-Eingangskontakt des dritten Steuerrelais und mit dem zweiten normalerweise offenen Eingangskontakt des dritten Steuerrelais verbunden ist; der Steuer-Ausgangskontakt des ersten Steuerrelais mit dem Steuer-Ausgangskontakt des zweiten Steuerrelais, mit dem Steuer-Ausgangskontakt des dritten Steuerrelais und mit einem Neutralleiter verbunden ist.

## Revendications

1. Système de compensation triphasé, comprenant :
un circuit électrique (200) configuré pour recevoir trois phases d'entrée d'une source d'alimentation triphasée à partir de laquelle sont fournies trois phases de sortie respectives, ledit circuit électrique étant en outre configuré pour compenser toute phase d'entrée incapable de fournir du courant à sa phase unique de sortie correspondante en substituant, à ladite phase de sortie, une phase de sortie fonctionnelle desdites trois phases de sortie, et étant en outre configuré pour compenser l'incapacité d'une ou deux phases d'entrée quelconques à fournir du courant à leurs une ou deux phases de sortie correspondantes en substituant, auxdites deux phases de sortie, la phase de sortie de la troisième phase,
dans lequel ledit circuit électrique (200) comprend des premier (C1), deuxième (C2) et troisième (C3) relais de commande connectés électriquement les uns aux autres, chacun comprenant des premier et deuxième contacts d'entrée normalement ouverts, des premier et deuxième contacts de sortie normalement ouverts, des premier et deuxième contacts d'entrée normalement fermés, des premier et deuxième contacts de sortie normalement fermés, un contact d'entrée de commande et un contact de sortie de commande,
dans lequel au moins un contact d'entrée normalement ouvert d'un relais est connecté,
dans lequel au moins un contact d'entrée normalement ouvert d'au moins un relais de commande est connecté à au moins un contact d'entrée normalement fermé d'au moins un autre relais de commande ;
dans lequel au moins un contact d'entrée normalement fermé d'au moins un relais de commande est connecté à au moins un contact de sortie normalement fermé d'au moins un autre relais de commande
dans lequel, lorsque deux des trois phases ne fournissent pas de courant à leurs relais de commande respectifs, les phases défectueuses sont compensées en fournissant du courant à partir du relais de commande restant ;
dans lequel les contacts Normalement Ouverts sont ouverts en l'absence de courant électrique et les contacts Normalement Fermés sont fermés en l'absence de courant électrique ;
dans lequel, en l'absence d'une ou deux phases, les connexions de circuits normalement fermés d'un relais de phase inactive sont configurées pour recevoir du courant à partir des connexions du circuit normalement ouvert de l'une des phases actives permettant à la phase inactive de fonctionner normalement.

2. Système de compensation triphasé selon la revendication 1, dans lequel une première entrée de phase est connectée audit contact d'entrée de commande du premier relais de commande et audit premier contact d'entrée normalement ouvert du premier relais de commande ; ledit premier contact de sortie normalement ouvert du premier relais de commande est connecté audit deuxième contact d'entrée normalement ouvert du premier relais de commande ; ledit deuxième contact d'entrée normalement ouvert du premier relais de commande est connecté audit premier contact d'entrée normalement fermé du troisième relais de commande ; ledit premier contact d'entrée normalement fermé du premier relais de commande est connecté audit deuxième contact d'entrée normalement ouvert du deuxième relais de commande ; ledit deuxième contact d'entrée normalement fermé du premier relais de commande est connecté audit deuxième contact de sortie normalement fermé du deuxième relais de commande, audit premier contact de sortie normalement fermé de deuxième relais de commande et audit deuxième contact de sortie normalement ouvert du deuxième relais de commande ; ledit deuxième contact de sortie normalement ouvert du premier relais de commande est connecté à une première sortie de phase, audit premier contact de sortie normalement fermé du premier relais de commande, audit deuxième contact de sortie normalement fermé du premier relais de commande et audit deuxième contact d'entrée normalement fermé du troisième relais de commande ; ledit deuxième contact de sortie normalement ouvert du deuxième relais de commande est connecté à une deuxième sortie de phase ; une deuxième entrée de phase est connectée audit contact d'entrée de commande du deuxième relais de commande et audit premier contact d'entrée normalement ouvert du deuxième relais de commande ; ledit premier contact de sortie normalement ouvert du deuxième relais de commande est connecté audit deuxième contact d'entrée normalement ouvert du deuxième relais de commande ; ledit premier contact d'entrée normalement fermé du deuxième relais de commande est connecté audit deuxième contact d'entrée normalement ouvert du troisième relais de commande ; ledit deuxième contact d'entrée normalement fermé du deuxième relais de commande est connecté audit deuxième contact de sortie normalement fermé du troisième relais de commande, audit premier contact de sortie normalement fermé du troisième relais de commande et audit deuxième contact de sortie normalement ouvert du troisième relais de commande ; ledit deuxième contact de sortie normalement ouvert du troisième relais de commande est connecté à une troisième sortie de phase ; une troisième entrée de phase est connectée audit contact d'entrée de commande du troisième relais de commande et audit premier contact d'entrée normalement ouvert du troisième relais de commande ; ledit premier contact de sortie normalement ouvert du troisième relais de commande est connecté audit deuxième contact d'entrée normalement ouvert du troisième relais de commande ; ledit contact de sortie de commande du premier relais de commande est connecté audit contact de sortie de commande du deuxième relais de commande, audit contact de sortie de commande du troisième relais de commande et au neutre.

3. Système de compensation triphasé selon la revendication 2, dans lequel une première entrée de phase est connectée audit contact d'entrée de commande du premier relais de commande et audit deuxième contact d'entrée normalement ouvert du premier relais de commande ; ledit premier contact de sortie normalement ouvert du premier relais de commande est connecté audit deuxième contact de sortie normalement ouvert du premier relais de commande, audit premier contact de sortie normalement fermé du premier relais de commande et audit deuxième contact de sortie normalement fermé du premier relais de commande ; ledit premier contact d'entrée normalement ouvert du premier relais de commande est connecté audit premier contact d'entrée normalement fermé du troisième relais de commande ; ledit premier contact d'entrée normalement fermé du premier relais de commande est connecté audit premier contact d'entrée normalement ouvert du deuxième relais de commande ; ledit deuxième contact d'entrée normalement fermé du premier relais de commande est connecté audit deuxième contact de sortie normalement fermé du deuxième relais de commande, audit premier contact de sortie normalement fermé du deuxième relais de commande, audit premier contact de sortie normalement ouvert du deuxième relais de commande et audit deuxième contact de sortie normalement ouvert du deuxième relais de commande ; ledit deuxième contact de sortie normalement ouvert du premier relais de commande est connecté à une première sortie de phase et audit deuxième contact d'entrée normalement fermé du troisième relais de commande ; ledit deuxième contact de sortie normalement ouvert du deuxième relais de commande est connecté à une deuxième sortie de phase ; une deuxième entrée de phase est connectée audit contact d'entrée de commande du deuxième relais de commande et audit deuxième contact d'entrée normalement ouvert du deuxième relais de commande ; ledit premier contact d'entrée normalement fermé du deuxième relais de commande est connecté audit premier contact d'entrée normalement ouvert du troisième relais de commande ; ledit deuxième contact d'entrée normalement fermé du deuxième relais de commande est connecté audit deuxième contact de sortie normalement fermé du troisième relais de commande, audit premier contact de sortie normalement fermé du troisième relais de commande, audit premier contact de sortie normalement ouvert du troisième relais de commande et audit deuxième contact de sortie normalement ouvert du troisième relais de commande ; ledit deuxième contact de sortie normalement ouvert du troisième relais de commande est connecté à une troisième sortie de phase ; une troisième entrée de phase est connectée audit contact d'entrée de commande du troisième relais de commande et audit deuxième contact d'entrée normalement ouvert du troisième relais de commande ; ledit contact de sortie de commande du premier relais de commande est connecté audit contact de sortie de commande du deuxième relais de commande, audit contact de sortie de commande du troisième relais de commande et au neutre.

4. Système de compensation triphasé selon la revendication 1, dans lequel ledit système unique de compensation triphasé fournit une phase unique pour de multiples appareils électriques.

5. Méthode de compensation d'une phase perdue d'une d'alimentation triphasée, comprenant la fourniture d'un système de compensation triphasé, comprenant :
un circuit électrique (200) comprenant des premier (C1), deuxième (C2) et troisième (C3) relais de commande connectés les uns aux autres, configurés pour recevoir trois phases de la source d'alimentation triphasée, une vers chacun desdits premier (C1), deuxième (C2) et troisième (C3) relais de commande respectivement, et pour compenser un dysfonctionnement de l'une desdites trois phases qui ne fournit pas de courant à son relais de commande respectif, en fournissant du courant au relais de commande respectif à partir de l'un des deux autres relais de commande,
dans laquelle ledit circuit électrique (200) comprend des premier (C1), deuxième (C2) et troisième (C3) relais de commande connectés électriquement les uns aux autres, comprenant chacun des premier et deuxième contacts d'entrée normalement ouverts, des premier et deuxième contacts de sortie normalement ouverts, des premier et deuxième contacts d'entrée normalement fermés, des premier et deuxième contacts de sortie normalement fermés, un contact d'entrée de commande et un contact de sortie de commande
dans laquelle au moins un contact d'entrée normalement ouvert d'un relais est connecté
dans laquelle au moins un contact d'entrée normalement ouvert d'au moins un relais de commande est connecté à au moins un contact d'entrée normalement fermé d'au moins un autre relais de commande ;
dans laquelle au moins un contact d'entrée normalement fermé d'au moins un relais de commande est connecté à au moins un contact de sortie normalement fermé d'au moins un autre relais de commande,
dans laquelle, lorsque deux des trois phases ne fournissent pas de courant à leurs relais de commande respectifs, les phases défectueuses sont compensées en fournissant du courant à partir du relais de commande restant ;
dans laquelle les contacts normalement ouverts sont ouverts en l'absence de courant électrique et les contacts normalement fermés sont fermés en l'absence de courant électrique ;
dans laquelle, en l'absence d'une ou deux phases, les connexions de circuits normalement fermés d'un relais de phase inactive sont configurées pour recevoir du courant à partir des connexions du circuit normalement ouvert de l'une des phases actives permettant à la phase inactive de fonctionner normalement.

6. Méthode selon la revendication 5, dans laquelle une première entrée de phase est connectée audit contact d'entrée de commande du premier relais de commande et audit premier contact d'entrée normalement ouvert du premier relais de commande ; ledit premier contact de sortie normalement ouvert du premier relais de commande est connecté audit deuxième contact d'entrée normalement ouvert du premier relais de commande ; ledit deuxième contact d'entrée normalement ouvert du premier relais de commande est connecté audit premier contact d'entrée normalement fermé du troisième relais de commande ; ledit premier contact d'entrée normalement fermé du premier relais de commande est connecté audit deuxième contact d'entrée normalement ouvert du deuxième relais de commande ; ledit deuxième contact d'entrée normalement fermé du premier relais de commande est connecté audit deuxième contact de sortie normalement fermé du deuxième relais de commande, audit premier contact de sortie normalement fermé du deuxième relais de commande et audit deuxième contact de sortie normalement ouvert du deuxième relais de commande ; ledit deuxième contact de sortie normalement ouvert du premier relais de commande est connecté à une première sortie de phase, audit premier contact de sortie normalement fermé du premier relais de commande, audit deuxième contact de sortie normalement fermé du premier relais de commande et audit deuxième contact d'entrée normalement fermé du troisième relais de commande ; ledit deuxième contact de sortie normalement ouvert du deuxième relais de commande est connecté à une deuxième sortie de phase ; une deuxième entrée de phase est connectée audit contact d'entrée de commande du deuxième relais de commande et audit premier contact d'entrée normalement ouvert du deuxième relais de commande ; ledit premier contact de sortie normalement ouvert du deuxième relais de commande est connecté audit deuxième contact d'entrée normalement ouvert du deuxième relais de commande ; ledit premier contact d'entrée normalement fermé du deuxième relais de commande est connecté audit deuxième contact d'entrée normalement ouvert du troisième relais de commande ; ledit deuxième contact d'entrée normalement fermé du deuxième relais de commande est connecté audit deuxième contact de sortie normalement fermé du troisième relais de commande, audit premier contact de sortie normalement fermé du troisième relais de commande et audit deuxième contact de sortie normalement ouvert du troisième relais de commande ; ledit deuxième contact de sortie normalement ouvert du troisième relais de commande est connecté à une troisième sortie de phase ; une troisième entrée de phase est connectée audit contact d'entrée de commande du troisième relais de commande et audit premier contact d'entrée normalement ouvert du troisième relais de commande ; ledit premier contact de sortie normalement ouvert du troisième relais de commande est connecté audit deuxième contact d'entrée normalement ouvert du troisième relais de commande ; ledit contact de sortie de commande du premier relais de commande est connecté audit contact de sortie de commande du deuxième relais de commande, audit contact de sortie de commande du troisième relais de commande et au neutre.

7. Méthode selon la revendication 5, dans laquelle une première entrée de phase est connectée audit contact d'entrée de commande du premier relais de commande et audit deuxième contact d'entrée normalement ouvert du premier relais de commande ; ledit premier contact de sortie normalement ouvert du premier relais de commande est connecté audit deuxième contact de sortie normalement ouvert du premier relais de commande, audit premier contact de sortie normalement fermé du premier relais de commande et audit deuxième contact de sortie normalement fermé du premier relais de commande ; ledit premier contact d'entrée normalement ouvert du premier relais de commande est connecté audit premier contact d'entrée normalement fermé du troisième relais de commande ; ledit premier contact d'entrée normalement fermé du premier relais de commande est connecté audit premier contact d'entrée normalement ouvert du deuxième relais de commande ; ledit deuxième contact d'entrée normalement fermé du premier relais de commande est connecté audit deuxième contact de sortie normalement fermé du deuxième relais de commande, audit premier contact de sortie normalement fermé du deuxième relais de commande, audit premier contact de sortie normalement ouvert du deuxième relais de commande et audit deuxième contact de sortie normalement ouvert du deuxième relais de commande ; ledit deuxième contact de sortie normalement ouvert du premier relais de commande est connecté à une première sortie de phase et audit deuxième contact d'entrée normalement fermé du troisième relais de commande ; ledit deuxième contact de sortie normalement ouvert du deuxième relais de commande est connecté à une deuxième sortie de phase ; une deuxième entrée de phase est connectée audit contact d'entrée de commande du deuxième relais de commande et audit deuxième contact d'entrée normalement ouvert du deuxième relais de commande ; ledit premier contact d'entrée normalement fermé du deuxième relais de commande est connecté audit premier contact d'entrée normalement ouvert du troisième relais de commande ; ledit deuxième contact d'entrée normalement fermé du deuxième relais de commande est connecté audit deuxième contact de sortie normalement fermé du troisième relais de commande, audit premier contact de sortie normalement fermé du troisième relais de commande, audit premier contact de sortie normalement ouvert du troisième relais de commande et audit deuxième contact de sortie normalement ouvert du troisième relais de commande ; ledit deuxième contact de sortie normalement ouvert du troisième relais de commande est connecté à une troisième sortie de phase ; une troisième entrée de phase est connectée audit contact d'entrée de commande du troisième relais de commande et audit deuxième contact d'entrée normalement ouvert du troisième relais de commande ; ledit contact de sortie de commande du premier relais de commande est connecté audit contact de sortie de commande du deuxième relais de commande, audit contact de sortie de commande du troisième relais de commande et au neutre.
